# EUROPEAN PATENT APPLICATION

(11) **EP 2 354 536 A1**
(43) Date of publication of application: **10.08.2011**
(21) Application number: 10152435.3
(22) Date of filing: 02.02.2010
(51) Int. Cl.: F03D 1/00

(54) **Support structure for supporting an offshore wind turbine**

(71) Applicant: Siemens Aktiengesellschaft, 80333 München (DE)
(72) Inventor: Hartkopf, Rune, 7400 Herning (DK)

(57) **Abstract**

A support structure (1, 100) for supporting offshore wind turbines is provided. It comprises a foundation (2) configured to at least partly contact a seabed and at least part of a tower (3). The foundation (2) and the at least part of the tower (3) are one-piece.

## Description

### Support structure for supporting an offshore wind turbine

The present invention relates to a support structure for supporting an offshore wind turbine. It further relates to a wind turbine.

Offshore wind turbine foundations normally fall into three groups, gravity foundations, mono-pile foundations, and advanced foundations such as tripods or suction bucket foundations.

Gravity foundations are typically made of concrete. They may be made hollow and have sufficient buoyancy for floatation to site, possibly supported with buoyancy elements, or they may be shipped by barge and lifted into place. The weight of the foundation itself is typically increased by ballasting with a heavy type of ballast, such as olivine, Gravity foundations have the disadvantage that they tend to become very expensive for large turbines and/or large water depths.

A mono-pile foundation consists of a steel pile, typically with a diameter of 4-5 metres. The pile is driven some 20-30 metres into the seabed depending on the type of underground. The mono-pile foundation is effectively extending the turbine tower under water and into the seabed.

An important advantage of this foundation is that no preparations of the seabed are necessary. On the other hand, it requires heavy duty piling equipment, and the foundation type is not suitable for locations with many large boulders in the seabed. It also tends to become expensive for large turbines and/or large water depths.

The most common advanced offshore foundation is the tripod foundation. This type of foundation draws on the experiences with light weight and cost efficient three-legged steel jackets for marginal offshore fields in the oil industry The structure typically consists of a central pipe and three inclined legs. The three legs are connected at the bottom and are also connected to the central pipe. At the end of each leg a short vertical pipe is used as jacket around a steel pile driven deeply into the seabed. After completion of the piling the jackets is injected with high-strength mortar and a firm connection between pile and leg is established.

Steel tripods have the disadvantage that they are physically very large structures with highly demanding, complex, fatigue-loaded welds. Hence, they tend to be very expensive.

Common to these and most other known foundations for offshore wind turbines is that when installed at the wind farm site the foundation structure that will support the wind turbine tower projects above water. This is for the obvious reason that the construction of connections including fasteners (bolts etc) under sea surface may be difficult and dangerous.

One exception is the foundation disclosed in EP 1 884 598. In EP 1 884 598 an offshore foundation is disclosed, which comprises a pile and a superstructure. The pile is rammed down into the seabed and only projects a limited stretch above the seabed. The pile provides a foundation stub for the superstructure, which is fastened on top of the pile. Here a challenge will be to establish the joint between pile and superstructure; a task that will normally be accomplished by injection with high-strength mortar.

Common to almost all offshore foundations is that the load-carrying part of the structure will typically at any given part of the foundation experience both compressive and tensile loading, since the external loads on the turbine can come from all directions. Furthermore, stresses from operating loads will typically oscillate between compressive and tensile stresses.

For that reason steel has been the preferred material, as it works well under changing stress conditions. Further steel has the advantage that the strength per mass is significantly better than for instance concrete. Towers are therefore typical made of steel to allow road transportation. However steel has three mayor disadvantages compared to concrete. Firstly, the price in relation to the strength is significantly larger, and widely influenced by fluctuations in the economy. Secondly, for steel in wind turbines fatigue is often the design driver, where extreme loads are for concrete. Concrete towers or foundations have therefore automatically longer lifetime if proper treated. Thirdly, steel requires very careful surface treatment to avoid corrosion in a marine environment.

Mono-piles and wind turbine generators are typically installed in pieces with a jack-up vessel, e.g. of mono-pile, transition piece, 2-3 tower sections, nacelle and blades. Typically foundations and wind turbine generators are installed in two steps, thus the jack-up have to install at each wind turbine generator location twice. Because the turbine is assembled offshore expensive vessel time and man hours is used, complete test is further difficult and must be preformed offshore. Furthermore, a jack-up vessel is an advanced piece of equipment. It has, for instance, an expensive jack-up system and a large revolving crane including a number of moving parts.

One exception is the foundation disclosed in EP 1 058 787, where the tower is made from modules that are kept in compression using post-tensioning cables. Here the disadvantage is that high-strength steel such as that used in the post-tensioning cables is rather susceptible to corrosion and hydrogen embrittlement. Therefore the long-term integrity of post-tensioning cables inserted into channels in the outer walls of a structure installed below sea level may be questionable.

A first objective of the present invention is to provide an advantageous support structure for supporting offshore wind turbines. A second objective of the present invention is to provide an advantageous wind turbine.

The first objective is solved by a support structure for supporting offshore wind turbines as claimed in claim 1. The second objective is solved by a wind turbine as claimed in claim 15. The depending claims define further developments of the invention.

The inventive support structure for supporting offshore wind turbines comprises a foundation configured to at least partly contact a seabed and at least part of a tower. The foundation and the at least part of the tower are one-piece. This has the advantage that a costly fastening of the tower onto the foundation is no longer necessary.

In the context of the present invention one-piece means that the foundation and the tower or part of the tower are integrally formed or made of one piece. At last, there is no connecting means between the foundation and the tower or part of the tower, or within different sections of the foundation.

The at least part of a tower as part of the inventive support structure is also designated as tower section. The tower or tower section may be connectable to a wind turbine generator, especially to a wind turbine nacelle.

The foundation can comprise a narrow section which has a smaller diameter than the maximum diameter of the tower. Preferably, the narrow section can be located in a splash and spray zone of the sea when the support structure is installed onto the seabed. The advantage of the narrow section being narrower than the tower or tower section is the fact that the narrow section is exposed to wave loads and the tower or tower section is exposed to wind loads. The larger diameter of the tower or tower section gives a stiffer structure of the tower.

Advantageously, the support structure may comprise concrete and/or steel. For example, it may comprise concrete of the type 45 Mpa or 30 Gpa. Concrete has the advantage that it is a relatively cheep material. Therefore the costs for the foundation and for the wind turbine can be reduced.

Furthermore, the foundation can comprise a lower section and/or a transition section having a changing diameter. The lower section may be configured to at least partly contact the seabed. Preferably, the lower section may be at least partly conical, for example to reduce scour. The transition section may be located between the narrow section and the tower or tower section. When the support structure is installed onto the seabed, the transition section can advantageously be located above highest wave level. Preferably the diameter of the transition section increases, for example continuously or stepwise, from the narrow section to the tower section to form a platform and/or to support a tower with a diameter which is greater than the diameter of the narrow section. Generally, the transition section can have a bigger diameter than the narrow section. The transition section can be used to lift the support structure during installation.

The tower or the tower section may comprise an outer wall. The narrow section may also comprise an outer wall. Advantageously, the outer wall of the narrow section can be thicker than the outer wall of the tower or tower section.

Advantageously, at least part of the support structure can be post-stressed. Post stressing may be utilized to lower tensile stress, especially in at least part of the concrete. For example, the post stress level in the narrow section can be different from the stress level in the tower. In this context post stress level means the stress in the particular structure element after tightening, activating or torquing a stressing means. The stressing means may be, for example, a cable, a rod or a wire. To provide different stress levels in the different sections of the support structure allows for adapting the particular stress level to the particular environmental conditions. For example, beneath and above sea level different stress levels may be favourable.

Generally, the support structure may comprise at least one post stressing means and/or at least one post tension reinforcement means, for example a cable, wire or rod. The at least one post stressing means and/or at least one post tension reinforcement means may be placed inside of the support structure or inside of a wall of the support structure or external along the side of the structure. The post stressing in the lower and narrow section may be drawn inside the support structure, for example inside the concrete support structure. The post stressing in the tower or tower section may be drawn at least partly outside of the outer wall, which may be a concrete wall, e.g. inside the tower or tower section.

The at least one post stressing means and/or at least one post tension reinforcement means can be placed in the tower or in the tower section at least partly outside of an outer wall and/or inside of the tower or tower section. Furthermore, the at least one post stressing means and/or at least one post tension reinforcement means can be placed in the lower section inside of an outer wall of the lower section. Moreover, the at least one post stressing means and/or at least one post tension reinforcement means can be placed in the narrow section inside of an outer wall of the narrow section.

Preferably, the post stressing means in the tower or tower section can be connected to a post stressing means in the transition section and/or to a post stressing means in the narrow section and/or to a post stressing means in the lower section. Furthermore, the post stressing means in the transition section can be connected to a post stressing means in the narrow section and/or to a post stressing means in the lower section. The post stressing means in the narrow section can be connected to a post stressing means in the lower section.

A post tension reinforcement can either be drawn in duct inside the concrete structure or drawn external along the side of the structure. In conjunction with internal post tension corrugated steel or at least one plastic duct may be casted into the concrete construction with anchors in both ends. Wires may be drawn through the ducts and tensioned by means of a hydraulic tension jack, for example. A protection may be filled into the ducts. Preferably, an expanding high strength grout can be used to lock the cables to the duct wall casted into the concrete structure. Other protection materials can be utilized such as grease or wax, which both allow additional tensioning, which can be a preferable way to cope with relaxation in steel wire and deformation of concrete. Internal reinforcement has the advantage that tension wires are well protected inside the concrete wall, especially protected from humidity by grout, grease or wax. An external post tension wire may be plastic sheathed and/or protected by grease. Preferably, the external post tension wire may be placed next to the concrete structure.

In one preferred embodiment the foundation is internal post-stressed, the duct can be filled with protection material e.g. grout, grease or wax for corrosion protection. The post tension of the tower part can be internal post-stressed. Wires can be connected to anchors for foundation post-stressing. Preferably post tension wire for foundation part is drawn from the bottom of the structure, and stressed at this level to minimize crane work, platform and scaffold arrangement.

Advantageously, the lower section and/or the narrow section and/or the transition section and/or the tower or tower section are/is hollow. In this case at least part of the support structure can be filled with ballast, for instance soil. This increases the stability under load of the support structure.

The lower section may comprise at least one skirt, for instance to provide a fixation of the support structure with the seabed. Moreover, the skirt can be configured or to reduce scour or to grout underneath to secure connection between the support structure and underlying soil. Furthermore, the skirt may be split into 3 or more champers. It can be used to level the foundation.

Generally, the soil interface can be either deep or shallow foundation. A deep foundation can comprise one or more piles. A shallow foundation can be gravity or suction bucket. Gravity foundations may be produced with skirt to lower demand for seafloor preparation and/or scour protection. Gravity without skirt is preferred.

The inventive wind turbine, especially offshore wind turbine, comprises an inventive support structure as previously described. The inventive wind turbine has the same advantages as the inventive support structure has.

All components of the inventive support structure or the inventive wind turbine can be produced on moving lines at a harbour near location. Buckle reinforcement can be prefabricated either by rolling net or by spinning reinforcement on to a revolving model. Jumpforming can be used for good surface quality.

Installation can take place by the means of a floating crane. For distant sites barge transportation is a possibility. Floating crane can be made as a catamaran that lifts above centre and thereby don't need to move ballast when lifting. Further, the floating crane can be made with ballast tanks allowing submerging more of the floating crane during installation to gain stability. For barge transportation the moving production line can be extended to load complete turbines on to transportation barges.

An advantage of the inventive support structure and the inventive wind turbine is that the support structure and/or the wind turbine can be installed and tested onshore. Wind turbine and foundation can be installed at once. This is possible due to the relatively low mass of the structure. No jacking system is necessary on the installation vessel. No large revolving crane is necessary on the installation vessel. Little or no maintenance of the support structure is necessary due to the choice of material, especially concrete. The lifetime of the support structure can probably meet the lifetime of the collector system, which is about 60 years. Moving production lines may create a more industrialised production. Local production can create local jobs which can be a factor for decision makers. The structure is stiff and has therefore potential against deeper water. Inexpensive concrete can be used, e.g. 45 Mpa and 30 Gpa. Therefore, the invention provides a low-cost offshore wind turbine foundation and tower and a low-cost offshore wind turbine.

Further features, properties and advantages of the present invention will become clear from the following description of an embodiment in conjunction with the accompanying drawings.
Figure 1 schematically shows an inventive support structure in a sectional view.
Figure 2 schematically shows a variant of an inventive support structure.
Figure 3 schematically shows an inventive wind turbine.
Figure 4 schematically shows an inventive wind turbine and an installation vessel.
Figure 5 schematically shows an inventive support structure with post-stressing cables.

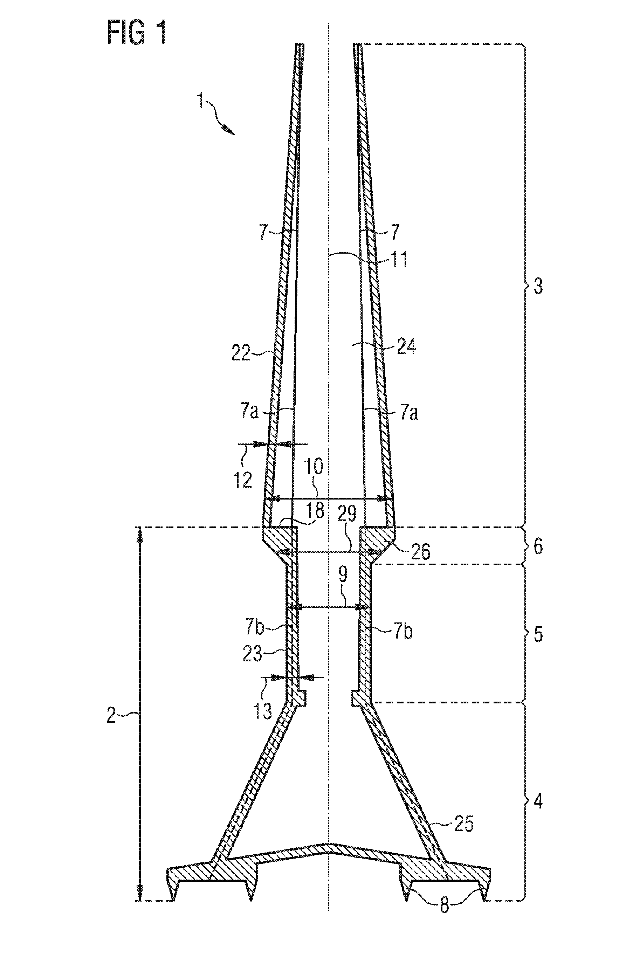

An embodiment of the present invention will now be described with reference to Figures 1 to 5.

Figure 1 schematically shows an inventive support structure for supporting offshore wind turbines in a sectional view. The support structure 1 comprises a foundation 2 and at least part of a tower 3. The centre line of the support structure 1 is designated with reference numeral 11. The foundation 2 and at least part of the tower 3 are one-piece. This means, that the foundation 2 and at least part of the tower 3 are made of one-piece or are integrally formed. In other words, there is no connection between the different sections of the support structure 1.

The foundation 2 comprises a lower section 4, a narrow section 5 and a transition section 6. The lower section 4 is followed by the narrow section 5. The narrow section 5 is followed by the transition section 6. The transition section 6 is followed by the tower 3 or the tower section 3.

The lower section 4 is configured to at least partly contact the seabed. It has a conical shape to reduce score. The lower section 4 comprises a number of skirts 8. The skirts 8 are placed at the bottom of the lower section 4. The skirts 8 are made suitable for reduction of scour and can be used to grout underneath to secure connection between the support structure 1 and underlying soil. Moreover, the skirts 8 can be used to level the foundation 2 by splitting the skirts 8 into three or more champers.

The complete support structure 1 or at least the foundation 2 or at least part of the foundation 2, for example the lower section 4 or part of the lower section 4 can be hollow. The hollow parts or at least part of the hollow sections can be filled with ballast such as soil. In figure 1 the complete support structure 1 is hollow comprising a hollow space 24 inside.

The tower 3 has a maximum diameter 10. The narrow section has a diameter 9. The maximum diameter 10 of the tower 3 is bigger than the diameter 9 of the narrow section 5. Moreover, the tower 3 comprises an outer wall 22 and the narrow section 5 comprises an outer wall 23. The thickness 12 of the outer wall 22 of the tower 3 is thinner than the thickness 13 of the outer wall 23 of the narrow section 5.

The lower section 4 has a conical shape with a decreasing diameter from the bottom to the narrow section 5. The transition section 6 has a continuously or stepwise increasing diameter 29 from the narrow section 5 to the tower section 3. Moreover, the transition section 6 has an increasing wall thickness from the narrow section 5 to the tower section 3. On the upper surface of the transition section 6, where the transition section 6 is followed by the tower section 3, a platform 18 is formed. The platform extends inside of the support structure 1.

The tower 3 or the tower section 3 has a decreasing diameter from the bottom, where it follows the transition section 6, to the top, where a wind turbine generator may be mounted onto the tower 3. Generally, the tower section 3 or the tower 3 is connectable to a wind turbine, especially to a wind turbine nacelle.

When the support structure 1 is properly installed onto the seabed, the narrow section 5 is located in a splash and spray zone and the transition section 6 is located above the highest wave level.

The support structure 1 comprises concrete. Furthermore, the support structure 1 comprises post-stressing means, for example at least one cable, wire, rod or any other suitable means for post-stressing the structure or at least part of the support structure 1. In Figure 1 the support structure 1 comprises at least two post-stressing cables 7. The post-stressing cables 7 are placed inside the support structure 1. More concretely, a first portion of the post-stressing cables 7a is located inside of the tower section 3 in the hollow space 24 inside of the tower section 3. The first portion of the post-stressing cables 7a is connected to the tower section 3 on top or close to the top of the tower section 3. A second portion of the post-stressing cables 7b is located inside of the outer walls 23, 25, 26 of the transition section 6, the narrow section 5 and the lower section 4. The ends of the second portion of the post-stressing cables 7b are connected to the lower section 4 at the bottom of the lower section 4, for example close to the skirts 8. Alternatively, the post-stressing cables 7 can be connected to the support structure 1 in another suitable way. Moreover, the post-stressing cables 7 can be located at least partly outside of the support structure 1.

When the support structure 1 or at least part of the support structure 1 is post-stressed, the post-stress level in the narrow section 5 can be different from the stress level in the tower section 3.

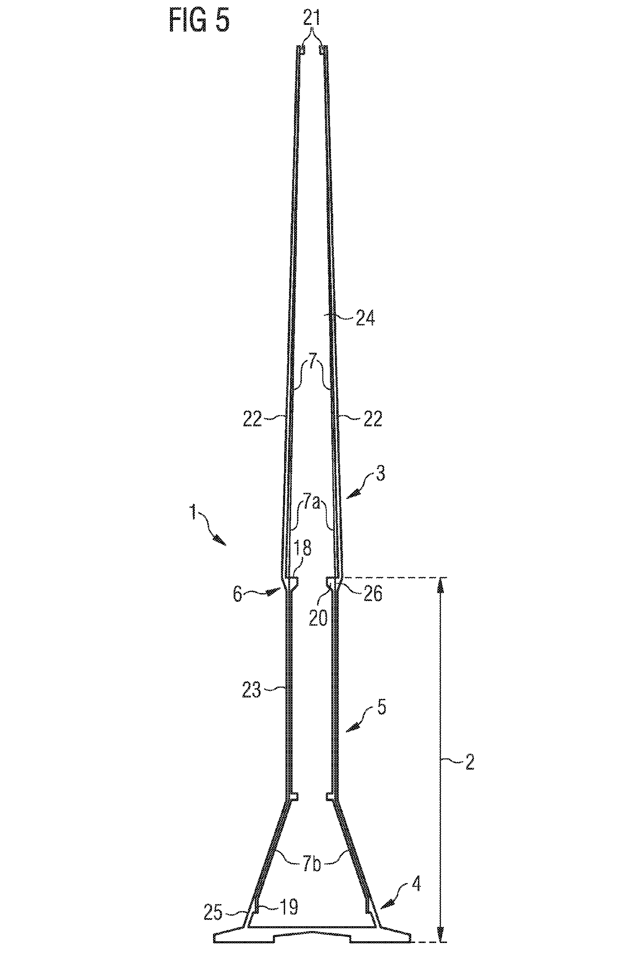

Figure 5 schematically shows a variation of the inventive support structure 1 of Figure 1. The skirts 8 are omitted for simplification. Moreover, the transition section 6 has a slightly different shape compared to Figure 1.

Figure 5 shows fixing elements 19, 20 and 21 for fixing the post-stressing cables 7. The fixing elements 21 are located on top of the tower section 3 close to the outer wall 22 of the tower section 3. The fixing elements 20 are located at the platform 18 of the transition section 6. The first portions 7a of the post-stressing cables run from the fixing elements 21 to the fixing elements 22 in the inner hollow space 24 of the tower section 3 close to the outer wall 22. The second portions 7b of the post-stressing cables run from the second fixing elements 20 at the transition section 6 to the third fixing elements 19. The third fixing elements 19 are located close to the bottom of the lower section 4 inside of the outer wall 25 of the lower section 4. The second portion 7b of the post-stressing cables runs inside of the outer wall 23 of the narrow section 5 and/or inside of the outer wall 25 of the lower section 4. Moreover, the second portion 7b of the post-stressing cables can also run inside of the wall 26 of the transition section 6.

Generally, the first portion 7a of the post-stressing cable and the second portion 7b of the post-stressing cable can be stressed separately. This means, that the stress level in the tower section 3 and in the foundation 2 can be different. Additional fixing elements can be placed, for example, between the lower section 4 and the narrow section 5 to provide for difference stress levels in the lower section 4 and the narrow section 5.

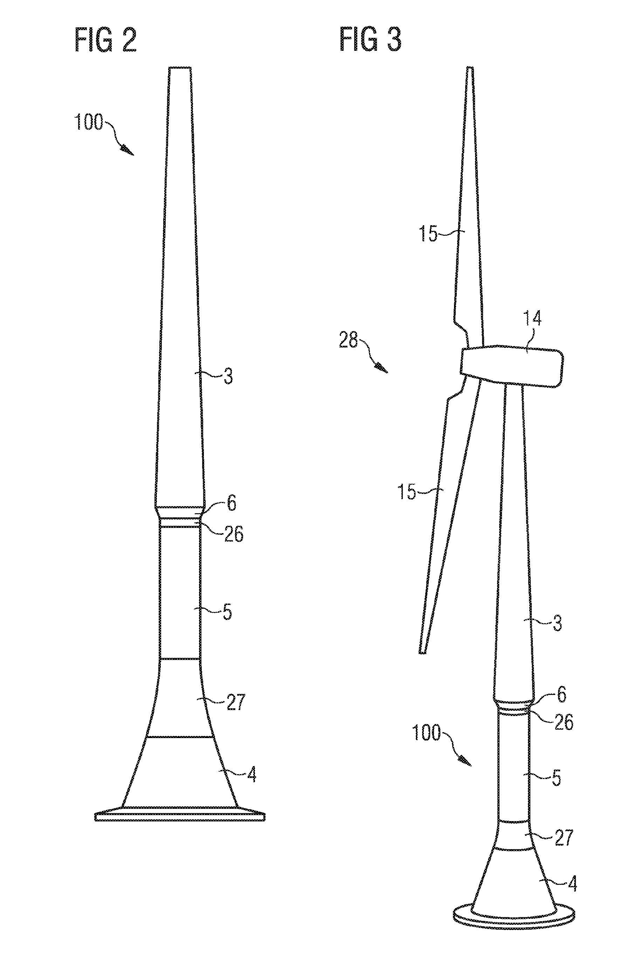

Figure 2 schematically shows a variant of an inventive support structure 100, which is slightly different from the support structure 1 of Figure 1 and 5. The support structure 100 differs from the support structure 1 in that it comprises a first intermediate section 26 between the narrow section 5 and the transition section 6 and a second intermediate section 27 , which is located between the lower section 4 and the narrow section 5.

Figure 3 schematically shows an inventive wind turbine 28 in a partly perspective view. The wind turbine 28 comprises a support structure 100, which was described in conjunction with Figures 1, 2 and 5. On top of the tower 3 a nacelle 14 is mounted. The nacelle 14 comprises a rotor with a number of rotor blades 15. A wind turbine typically comprises two or three rotor blades 15.

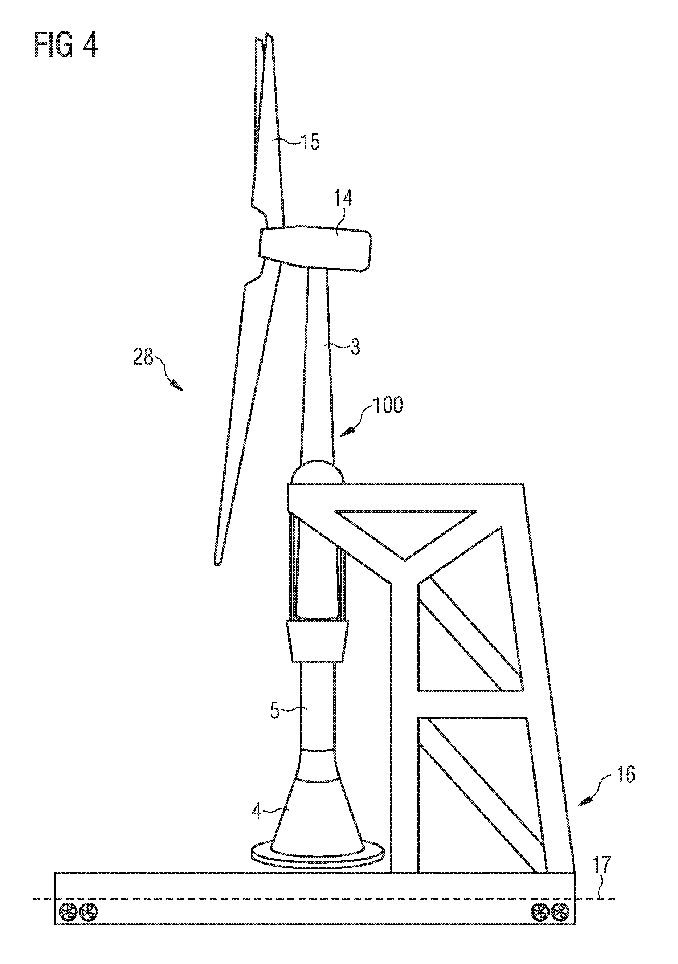

Figure 4 schematically shows the inventive wind turbine 28 of Figure 3, which is fixed to an installation vessel 16. The sea level is designated by reference numeral 17. The installation vessel 16 may comprise a floating catamaran crane with a lifting crane. For example, the installation vessel 16 may comprise two self propellered barges, which may be connected by a giant frame carrying lifting or revolving crane. In this case the offshore work is reduced to a minimum, only including the transport and placement of the support structure with the preinstalled and tested wind turbine.

## Claims

1. A support structure (1, 100) for supporting offshore wind turbines comprising a foundation (2) configured to at least partly contact a seabed and at least part of a tower (3), wherein the foundation (2) and the at least part of the tower (3) are one-piece.

2. The support structure (1, 100), as claimed in claim 1, wherein the support structure (1, 100) comprises concrete and/or steel.

3. The support structure (1, 100), as claimed in claim 1 or 2,
wherein the foundation (2) comprises a narrow section (5) having a smaller diameter (9) than the maximum diameter (10) of the tower (3) and/or a lower section (4) and/or a transition section (6) having a changing diameter (29).

4. The support structure (1, 100), as claimed in claim 3, wherein the transition section (6) is located between the narrow section (5) and the tower (3).

5. The support structure (1, 100), as claimed in any of the claims 1 to 4,
wherein support structure (1, 100) comprises a transition section (6) which has a bigger diameter than the narrow section (5).

6. The support structure (1, 100), as claimed in any of the claims 1 to 5,
wherein the tower (3) comprises an outer wall (22) and the narrow section (5) comprises an outer wall (23), the outer wall (23) of the narrow section (5) being thicker than the outer wall (22) of the tower (3).

7. The support structure (1, 100), as claimed in any of the claims 1 to 6,
wherein at least part of the support structure (1, 100) is post-stressed.

8. The support structure (1, 100), as claimed in claim 7, wherein the post stress level in the narrow section (5) is different from the stress level in the tower (3).

9. The support structure (1, 100), as claimed in any of the claims 1 to 8,
wherein the support structure (1, 100) comprises at least one post stressing means (7, 19, 20, 21) and/or at least one post tension reinforcement means (7, 19, 20, 21).

10. The support structure (1, 100), as claimed in claim 9, wherein the post stressing means (7) and/or at least one post tension reinforcement means (19, 20, 21) is placed inside of the support structure (1, 100) or inside of a wall (22, 23, 25, 26) of the support structure (1, 100) or external along the side of the structure (1, 100).

11. The support structure (1, 100), as claimed in claim 9 or 10,
wherein the post stressing means (7) and/or at least one post tension reinforcement means (19, 20, 21) is placed in the tower (3) at least partly outside of an outer wall (22) and/or inside of the tower (3), and/or in the lower section (4) inside of an outer wall (25) of the lower section (4), and/or in the narrow section (5) inside of an outer wall (23) of the narrow section (5).

12. The support structure (1, 100), as claimed in any of the claims 9 to 11,
wherein the post stressing means (7) in the tower (3) is connected to a post stressing means (7) in the transition section (6) and/or to a post stressing means (7) in the narrow section (5) and/or to a post stressing means (7) in the lower section (4); and/or the post stressing means (7) in the transition section (6) is connected to a post stressing means (7) in the narrow section (5) and/or to a post stressing means (7) in the lower section (4); and/or the post stressing means (7) in the narrow section (5) is connected to a post stressing means (7) in the lower section (4).

13. The support structure (1, 100), as claimed in any of the claims 1 to 12,
wherein the lower section (4) and/or narrow section (5) and/or transition section (6) and/or tower (3) are/is hollow.

14. The support structure (1, 100), as claimed in any of the claims 1 to 13,
wherein the lower section (4) comprises at least one skirt (8) .

15. A wind turbine comprising a support structure (1, 100) as claimed in any of the claims 1 to 14.
